# EUROPÄISCHE PATENTSCHRIFT

(11) **EP 2 144 500 B1**
(45) Veröffentlichungstag und Bekanntmachung des Hinweises auf die Patenterteilung: **22.02.2017**
(21) Anmeldenummer: 08736324.8
(22) Anmeldetag: 17.04.2008
(51) Int. Cl.: A01N 25/10, A01N 43/78, A01N 47/12, A01P 3/00, B27K 3/38, B27K 3/50

(54) **2-THIAZOL-4YL-1H-BENZOIMIDAZOL (THIABENDAZOL ODER TBZ) HALTIGE WIRKSTOFF-FORMULIERUNGEN ZUR HERSTELLUNG VON WPC**
ACTIVE INGREDIENT FORMULATIONS CONTAINING 2-THIAZOLE-4YL-1H-BENZOIMIDAZOL (THIABENDAZOLE OR TBZ) FOR THE PRODUCTION OF WPC
FORMULATIONS DE PRINCIPES ACTIFS CONTENANT DU 2-THIAZOL-4YL-1H-BENZO-IMIDAZOL (THIABENDAZOL OU TBZ) DESTINEES A LA PRODUCTION DE PVC

(30) Priorität: 27.04.2007 DE 102007020450
(43) Veröffentlichungstag der Anmeldung: 20.01.2010
(73) Patentinhaber: LANXESS Deutschland GmbH, 50569 Köln (DE)
(72) Erfinder: BÖTTCHER, Andreas, 50968 Köln (DE); SPETMANN, Peter, 51377 Leverkusen (DE); KUGLER, Martin, 42799 Leichlingen (DE); JAETSCH, Thomas, 50668 Köln (DE); RENNER, Gerd-Friedrich, 51515 Kürten-Biesfeld (DE); MATYSIAK, Rolf, 47239 Duisburg (DE)
(86) Internationale Anmeldenummer: PCT/EP2008/054661
(87) Internationale Veröffentlichungsnummer: WO 2008/132060

(56) Entgegenhaltungen:
- WO-A-2004/094120
- US-A1- 2006 013 833
- US-A1- 2006 229 381
- DATABASE WPI Week 199425 Thomson Scientific, London, GB; AN 1994-205595 XP002489028 & JP 06 143205 A (AICA KOGYO CO LTD) 24. Mai 1994 (1994-05-24)
- DATABASE WPI Week 200674 Thomson Scientific, London, GB; AN 2006-713964 XP002489107 & KR 2005 082 946 A (BOK JOUNG SOO) 24. August 2005 (2005-08-24)

## Beschreibung

Die vorliegende Erfindung betrifft die Verwendung von biozide Mischungen enthaltend Thiabendazol (TBZ) und 3-Iod-2-propinyl-N-butylcarbamat (IPBC) zum Schutz von Composit-Werkstoffen aus cellulosehaltigen Materialien (speziell Holz) und Kunststoffen (so genannte *wood plastic Composites, WPC*) sowie ein Verfahren zur Herstellung von WPC als auch das biozid ausgerüstete WPC selbst. Weiterhin werden TBZ haltige Zusammensetzungen beschrieben, die einen Borat-Anteil (gemessen als B₂O₃) von kleiner als 0,1 Gew.-% aufweisen sowie entsprechende WPC und deren Herstellung.

Seit ihrer Markteinführung vor etwas mehr als 10 Jahren haben so genannte WPC (*wood plastic Composites*) für den Einsatz im Außenbereich (Deckings, Sidings) beachtliche Marktanteile unter teilweiser Substitution von klassischen Vollholzprodukten erreicht.

Eine Komponente der Triebkraft dieser Markt-Entwicklung ist und war sicherlich die Annahme, WPC seien aufgrund ihres Kunststoff-Anteils resistent gegen den Befall durch Pilze. Jedoch bereits kurz nach der Markteinführung von WPC für den Außenbereich erschienen Berichte über den Pilz-Bewuchs von natürlich bewitterten WPC (P.I. Morris und P. Cooper, Forest Products Journal, 1998, 48(1), 86-88) und folgende Untersuchungen im Labor zeigten eindeutig die Anfälligkeit von WPC gegenüber dem Bewuchs durch Pilze (z.B. P.E. Laks, Wood Design Focus, 2000, 11(4), 7.14; M.Mankowski und J.J.Morrell, Wood and Fiber Science, 2000, 32(3), 340-345; N.M. Stark et al, Journal of Applied Polymer Science, 2003, 90(10), 2609-2617). Insbesondere spielen hier Holz verfärbende sowie Moder- und Weichfäule verursachende Pilze, wie z.B. Asco- und Deuteromyceten, eine wichtige Rolle. Neben den besagten Pilzen können außerdem auch Holz zerstörende Pilze, wie z.B. Basidiomyceten, WPC angreifen und zerstören. Weiterführende Studien an kommerziell verfügbaren WPC-Deckings zeigten darüber hinaus, dass auch WPC zur Aufnahme von für das Pilzwachstum hinreichender Mengen Wasser befähigt sind (W. Wang und J.J. Morell, Forest Products Journal, 2005, 54(12), 209-212), so dass neben dem oberflächlichen Befall auch von einer Gefährdung tieferer Schichten des Composite-Materials auszugehen ist.

Da neben der Haltbarkeit und beworbenen Wartungsfreiheit auch die Optik, Ästhetik und Haptik für die Nachfrage nach WPC-Deckings verantwortlich ist, stellt insbesondere der Schutz der Oberfläche gegen Befall durch Pilze eine wichtige Aufgabe dar. Die vorgenannte Unbeständigkeit von WPC gegen biologischen Befall macht daher den Einsatz von Bioziden unumgänglich. Hierbei ist zu beachten, dass die homogene Verteilung des Biozids im Werkstoff von Vorteil ist, da jede innere Fläche des Werkstoffes durch beabsichtigte mechanische Bearbeitung (Sägen, Fräsen), durch benutzungsbedingten Verschleiß sowie durch Alterung (z.B. Rissbildung) zu einer Außenfläche werden kann.

Das heute in WPC am häufigsten eingesetzte Fungizid ist Zinkborat (J. Simonsen et al, Holzforschung, 2004, 58, 205-208), das allerdings eine Reihe von Nachteilen aufweist. So weist Zinkborat einerseits eine höhere Wirksamkeit gegen holzzerstörende Pilze auf als gegen die die Oberfläche beeinträchtigenden Schimmel- und Bläuepilze. Andererseits zeigt Zinkborat aufgrund seiner Wasserlöslichkeit ein ausgeprägtes Leaching. Hierdurch sind zum Schutz der WPC relativ große Mengen (2-10%; M.P. Wolcott et al, Forest Products Journal, 2002, 52(6), 21-27) Zinkborat erforderlich, was sich auch nachteilig auf die Umwelt auswirkt.

Aufgrund der oben genannten Problematik wird nach organischen, insbesondere schwermetallfreien Wirkstoffen bzw. Mischungen biozider Wirkstoffe gesucht, die auch in niedrigen Einsatzkonzentrationen WPC vor dem Befall durch Pilze schützen.

Der Einsatz organischer Biozide in WPC stellt dafür jedoch eine enorme Herausforderung dar, da diese Verbindungen unter den Bedingungen der Herstellung von WPC (hohe Temperaturen) eine hinreichende Stabilität aufweisen müssen. Aus diesem Grunde kommen bislang fast ausschließlich anorganische Biozide zum Einsatz.

Einige Versuche sind bereits unternommen worden, alternative Biozide für diese Anwendung bereitzustellen. So finden sich Teilersätze von anorganischen Bioziden bspw. in WO 2006/127649 durch ausgewählte organische Wirkstoffe, ohne jedoch auf die anorganische Basis ganz verzichten zu können.

IPBC selbst (US-A-2006/0229381) als auch in Verbindung mit Stabilisatoren (US-A-2006/0013847) oder in Verbindungen mit den Wirkstoffen Ziram und/oder Thiram (US-A-2005/0049224) wurde bereits für WPC beschrieben.

Auch Tetrabromobisphenol A (TBBA) (WO-A-2004/060066), 1,2-Benzisothiazolin-3-on (BIT) (US-A-2004/0076847) sowie einige andere spezielle Wirkstoffe sind für WPC bereits zum Einsatz gekommen.

Aus US-A-2006/229381 ist bekannt, dass IPBC zum Schutz von WPC's eingesetzt werden kann, aber aufgrund seiner klebrigen Eigenschaften technisch schlecht zu verarbeiten ist. Zur Verbesserung der Fließfähigkeit und der Verarbeitbarkeit von IPBC ist aus der US-A-2006/229381 die Verwendung von Calcium- und/oder Zinkstearat bekannt.

Die genannten Lösungen bieten jedoch noch ein erhebliches Verbesserungspotential.

Es wurde nun gefunden, dass Thiabendazol (im folgenden TBZ) und IPBC beim Einsatz in WPC eine
ausreichende Temperaturbeständigkeit und eine ausgezeichnete fungizide Wirkung aufweist, wobei die Mitverwendung von anorganischen Bioziden, insbesondere Boraten nicht erforderlich ist.

Die Erfindung betrifft daher eine biozide Mischung, enthaltend TBZ, IPBC (3-Iod-2-propinyl-N-butylcarbamat) und als Trennmittel mindestens eine pyrogene Kieselsäure mit einem Gehalt von bis zu 3 Gew.-% bezogen auf die biozide Mischung.

Biozide Zusammensetzungen enthaltend TBZ sind zum Schutz von Wood-Plastic-Composites (WPC), enthaltend thermoplastisches Polymer und Holzpartikel, vor Befall und/oder Zerstörung durch Mikroorganismen geeignet und die bioziden Zusammensetzungen enthalten einen Borat-Anteil (gemessen als B₂O₃) von kleiner als 0,1 Gew.-%. Die Bestimmung des Boratanteils erfolgt vorzugsweise durch Atomabsorptionsspektroskopie (AAS).

Unter "Holzpartikel" wird im Rahmen dieser Erfindung bspw. Holzfasern, Holzgranulat, Holzmehl oder jede andere partikuläre Holzform verstanden. Die Holzpartikel besitzen bevorzugt eine Korngröße von kleiner 3 mm, insbesondere von kleiner 1,5 mm, besonders bevorzugt von kleiner 1 mm.

Unter "thermoplastischem Polymer" wird vorzugsweise PVC, PET, Fluorpolymere, HDPE, LDPE, LLDPE, PP, HDPP, LDPP, WHMWPE, MPE oder Mischungen davon verstanden. Biozide Zusammensetzungen können auch in Kombinationen mit weiteren Fungiziden gegen Holz zerstörende Basidiomyceten und/oder Insektiziden und/oder Algiziden zum Einsatz kommen.

Als gegen Holz zerstörende Basidiomyceten wirksame Fungizide zählen beispielsweise: Azaconazol, Azocyclotin, Bitertanol, Bromuconazol, Cyproconazol, Diclobutrazol, Difenoconazol, Diniconazol, Epoxyconazol, Etaconazol, Fenbuconazol, Fenchlorazol, Fenethanil, Fluquinconazol, Flusilazol, Flutriafol, Furconazol, Hexaconazol, Imibenconazol, Ipconazol, Isozofos, Myclobutanil, Metconazol, Paclobutrazol, Penconazol, Propioconazol, Prothioconazol, Simeoconazol, (+)-cis-1-(4-chlorphenyl)-2-(1H-1,2,4-triazol-1-yl)-cycloheptanol, 2-(1-tert-Butyl)-1-(2-chlorphenyl)-3-(1,2,4-triazol-1-yl)-propan-2-ol, Tebuconazol, Tetraconazol, Triadimefon, Triadimenol, Triapenthenol, Triflumizol, Triticonazol, Uniconazol sowie deren Metallsalze und Säureaddukte;
Als Algizide sind beispielsweise zu nennen: Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryn, Azimsulfuron,
Benazolin, Benfluralin, Benfuresat, Bensulfuron, Bensulfid, Bentazon, Benzofencap, Benzihiazuron, Bifenox, Bispyribac, Bispyribac-Natrium, Borax, Bromacil, Bromobutide, Bromofenoxim, Bromoxynil, Butachlor, Butamifos, Butralin, Butylat, Bialaphos, Benzoylprop, Bromobutide, Butroxydim,
Carbetamid, Carfentrazone-ethyl, Carfenstrol, Chlomethoxyfen, Chloramben, Chlorbromuron, Chlorflurenol, Chloridazon, Chlorimuron, Chlornitrofen, Chloressigsäure, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cycloat, Cycloxydim, Chloroxynil, Clodinafop-propargyl, Cumyluron, Clometoxyfen, Cyhalofop, Cyhalofop-butyl, Clopyrasuluron, Cyclosulfamuron,
Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diduron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,
Eglinazin, Endothal, EPTC, Esprocarb, Ethalfluralin, Ethidimuron, Ethofumesat, Ethobenzanid, Ethoxyfen, Ethametsulfuron, Ethoxysulfuron,
Fenoxaprop, Fenoxaprop-P, Fenuron, Flamprop, Flamprop-M, Flazasulfuron, Fluazifop, Fluazifop-P, Fuenachlor, Fluchloralin, Flufenacet, Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumicloracpentyl, Flurnipropyn, Flumioxzim, Flurtamon, Flumioxzim, Flupyrsulfuron-methyl, Fluthiacet-methyl,
Glyphosate, Glufosinate-ammonium
Haloxyfop, Hexazinon,
Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,
Ketospiradox,
Lactofen, Lenacil, Linuron,
MCPA, MCPA-hydrazid, MCPA-thioethyl, MCPB, Mecoprop, Mecoprop-P, Mefenacet, Mefluidid, Mesosulfuron, Metam, Metamifop, Metamitron, Metazachlor, Methabenzthiazuron, Methazol, Methoroptryne, Methyldymron, Methylisothiocyanat, Metobromuron, Metoxuron, Metribuzin, Metsulfuron, Molinat, Monalid, Monolinuron, MSMA, Metolachlor, Metosulam, Metobenzuron,
Naproanilid, Napropamid, Naptalam, Neburon, Nicosulfuron, Norflurazon, Natriumchlorat,
Oxadiazon, Oxyfluorfen, Oxysulfuron, Orbencarb, Oryzalin, Oxadiargyl,
Propyzamid, Prosulfocarb, Pyrazolate, Pyrazolsulfuron, Pyrazoxyfen, Pyribenzoxim, Pyributicarb, Pyridat, Paraquat, Pebulat, Pendimethalin, Pentachlorophenol, Pentoxazon, Pentanochlor, Petroleumöle, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,
Quinmerac, Quinocloamine, Quizalofop, Quizalofop-P, Quinchlorac,
Rimsulfuron,
Sethoxydim, Sifuron, Simazine, Simetryn, Sulfosulfuron, Sulfometuron, Sulfentrazone, Sulcotrione, Sulfosate,
Teeröle, TCA, TCA-Natrium, Tebutam, Tebuthiuron, Terbacil, Terbumeton, Terbutylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thiadiazimin, Thiazopyr, Triflusulfuron,
Vernolat
Ganz besonders bevorzugt handelt es sich bei den Algiziden um Triazinverbindungen, wie beispielsweise Terbutryn, Cybutryn, Propazin oder Terbuton, um Harnstoffverbindungen, wie Beispielsweise Diuron, Benzthiazuron, Methabenzthiazuron, Tebuthiuron, und Isoproturon, oder um Uracile wie beispielsweise Terbacil.

Als insektizide Wirkstoffe kommen bspw. in Frage:
Organo(thio)phosphate wie Acephate, Azamethiphos, Azinphos-methyl, Chlorpy rifos, Chlorpyriphos-methyl, Chlorfenvinphos, Diazinon, Dichlorvos, Dicrotophos, Dimethoate, Disulfoton, Ethion, Fenitrothion, Fenthion, Isoxathion, Malathion, Methamidophos, Methidathion, Methyl-Parathion, Mevinphos, Monocrotophos, Oxydemeton-methyl, Paraoxon, Parathion, Phenthoate, Phosalone, Phosmet, Phosphamidon, Phorate, Phoxim, Pirimiphos-methyl, Profenofos, Prothiofos, Sulprophos, Triazophos, Trichlorfon;
Carbamate wie Alanycarb, Benfuracarb, Bendiocarb, Carbaryl, Carbosulfan, Fenoxycarb, Furathiocarb, Indoxacarb, Methiocarb, Methomyl, Oxamyl, Pirimicarb, Propoxur, Thiodicarb, Triazamate;
Pyrethroide wie Allethrin, Bifenthrin, Cyfluthrin, Cyphenothrin, Cypermethrin so wie die alpha-, beta-, theta- und zeta-Isomere, Deltamethrin, Esfenvalerate, Ethofenprox, Fenpropathrin, Fenvalerate, Cyhalothrin, Lambda-Cyhalothrin, Imiprothrin, Permethrin, Prallethrin, Pyrethrin I, Pyrethrin II, Silafluofen, Tau Fluvalinate, Tefluthrin, Tetramethrin, Tralomethrin, Transfluthrin, Zeta-Cypermethrin;
Arthropode Wachstumsregulatoren wie a) Chitinsyntheseinhibitoren; z. B. Benzoylharnstoffe wie Chlorfluazuron, Cyromacin, Diflubenzuron, Flucycioxuron, Flufenoxuron, Hexaflumuron, Lufenuron, Novaluron, Teflubenzuron, Tritlumuron; Buprofezin, Diofenolan, Hexythiazox, Etoxazole, Clofentazine; b) Ecdysone Antagonisten wie Halofenozide, Methoxyfenozide, Tebufenozide; c) Juvenoide wie Pyriproxyfen, Methoprene, Fenoxycarb; d) Lipidbiosynthese-Inhibitoren wie Spirodiclofen;
Neonicotinoide wie Flonicamid, Clothianidin, Dinotefuran, Imidacioprid, Thiamethoxam, Nitenpyram, Nithiazin, Acetamiprid, Thiacioprid;
Pyrazol-lnsektizide wie Acetoprole, Ethiprole, Fipronil, Tebufenpyrad, Tolfenpyrad und Vaniliprole.

Weiterhin Abamectin, Acequinocyl, Amitraz, Azadirachtin, Bifenazate, Cartap, ChlorFenapyr, Chlordimeform, Cyromazine, Diafenthiuron, Diofenolan, Emamec tin, Endosulfan, Fenazaquin, Formetanate, Formetanate-Hydrochlorid, Hydramethylnon, Indoxacarb, Piperonylbutoxid, Pyridaben, Pymetrozine, Spinosad, Thiamethoxam, Thiocyclam, PyrIdalyl, Fluacyprim, Milbemectin, Spirosmesifen, Flupyrazofos, NCS 12, Flubendiamid, Bistrifluron, Benciothiaz, Pyrafluprole, Pyriprole, Amidoflumet, Flufenerin, Cyflumetofen, Lepimectin, Profluthrin, Dimefluthrin und Metaflumizone.

Hierunter sind solche Insektizide bevorzugt, die gegen holzzerstörende Insekten und insbesondere gegen die folgenden holzzerstörenden Insekten wirksam sind:
Ordnung Coleoptera (Käfer): Cerambycidae wie Hylotrupes bajulus, Callidium violaceum; Lyctidae wie Lyctus linearis, Lyctus brunneus; Bostrichidae wie Dinoderus minutus; AnobIidae wie Anoblum punctatum, Xestoblum rufovillosum; Lymexylidaewie Lymexylon navale; Platypodidae wie Platypus cylindrus; Oedemeridae wie Nacerda melanura. Ordnung Hymenoptera (hautflügler): Formicidae wie Camponotus abdominalis, Laslus flavus, Lasius brunneus, Laslus fuliginosus;
Ordnung Isoptera (Termiten): Calotermitidae wie Calotermes flavicollis, Cryptothermes brevis; Hodotermitidae wie Zootermopsis angusticollis, Zootermopsis nevadensis; Rhinotermitidae wie Reticulitermes flavipes, Reticulitermes lucifugus, Coptoter mes formosanus, Coptotermes acinaciformis; Mastotermitidae wie Mastotermes darwiniensis. Hierzu zählen insbesondere die insektiziden Wirkstoffe aus der Klasse der Pyrethroide, arthropode Wachstumsregulatoren, wie Chitinbiosyntheseinhibitoren, ecdysone Antagonisten, Juvenoide, Lipidbiosynthese-Inhibitoren, Neonicotinoide, Pyrazol-Insektizide sowie Chlorfenapyr.

Bevorzugt sind insbesondere insektizide Wirkstoffe der Gruppe der Neonicotinoide und Pyrethroide und ganz besonders bevorzugt insektizide Wirkstoffe der Gruppe der Neonicotinoide.

Als Trennmittel ist pyrogene Kieselsäure zu nennen, mit einem Gehalt von bis zu 3 Gew.-%, bevorzugt bis zu 2.5 Gew.-% und ganz besonders bevorzugt bis zu 2 Gew.-%, bezogen auf die biozide Zusammensetzung bzw. die biozide Mischung.

Eine biozide Zusammensetzung enthält bevorzugt mehr als 90 Gew.-%, vorzugsweise mehr als 95 Gew.-% TBZ und ggf. weiteren bioziden Wirkstoffen und Trennmittel.

Eine biozide Zusammensetzung enthält bevorzugt zu mehr als 90 Gew.-%, vorzugsweise zu mehr als 95 Gew.-% TBZ und Trennmittel.

Eine biozide Zusammensetzung kann bevorzugt zusätzlich einen Leitfähigkeitsverbesserer (z.B. Graphit) mit einem Gehalt von bis zu 5 Gew.-%, bevorzugt mit einem Gehalt von bis zu 3 Gew.-% und ganz besonders bevorzugt mit einem Gehalt von bis zu 2.5 Gew.-% enthalten.

Die biozide Zusammensetzung liegt vorzugsweise als partikuläre Feststoffpräparation oder in Form einer Lösung oder Dispersion der bioziden Zusammensetzung in einer Polymermatrix (im folgenden Masterbatch) vor.

Die partikuläre Feststoffpräparation kann dabei als Pulver oder Granulat vorliegen. Bevorzugt liegt sie in einer freifließbaren Form vor. Die Primärpartikel der Feststoffpräparation weisen vorzugsweise eine Teilchengröße von nicht mehr als 500µm, bevorzugt weniger als 100µm, ganz besonders bevorzugt weniger als 50µm auf.

In Granulatform besitzt die Feststoffpräparation vorzugsweise eine mittlere Teilchengröße, bestimmt aus der Massenverteilung, von 50 bis 5 000 µm, vorzugsweise 100 bis 2 000 µm, insbesondere 100 bis 500 µm.

Die bevorzugt eingesetzten Feststoffpräparationen, sind selbst ebenfalls Gegenstand der Erfindung. Diese sind weiterhin dadurch gekennzeichnet, dass sie einen Borat-Anteil (gemessen als B₂O₃) von kleiner als 0,1 Gew.-%, insbesondere kleiner als 0.05 Gew.-% aufweisen.

Der Masterbatch ist vorzugsweise gekennzeichnet durch ein Polymer, vorzugsweise eines ausgewählt aus der Gruppe PVC, PET, Fluorpolymer, HDPE, LDPE, LLDPE, PP, HDPP, LDPP, WHMWPE, MPE oder einer Mischung davon und die erfindungsgemäße Mischung, und ggf. weitere Wirkstoffe sowie ggf. weitere Additive, wobei auch die Masterbatches einen Borat-Anteil (gemessen als B₂O₃) von kleiner als 0,1 Gew.-%, insbesondere kleiner als 0,05 Gew.-% aufweisen.

Der Masterbatch selbst ist auch Gegenstand der Erfindung und enthält vorzugsweise von 20 bis 99 Gew.-% Polymer, insbesondere 40 bis 70 Gew-% und 1 bis 80 Gew.-% TBZ, insbesondere 30 bis 60 Gew.-%.

Ein Verfahren zur Herstellung eines Masterbatch, ist, dass man
a) ein Polymer und eine biozide Zusammensetzung enthaltend TBZ mischt und zusammen extrudiert oder
b) das in einem Lösungsmittel gequollene Polymer mit einer Lösung der bioziden Zusammensetzung, enthaltend TBZ mischt und die Lösungsmittel der gemeinsamen Mischung abtrennt, vorzugsweise destillativ.

Der Weg a) erfolg vorzugsweise durch Compoundierung und Extrusion biozider Zusammensetzungen, bspw. der oben beschriebenen Feststoffpräparationen in Polymeren wie bspw. PET, PVC, Fluorpolymere, HDPE, LDPE, LLDPE, PP, HDPP, LDPP, WHMWPE, MPE sowie Mischungen davon, wobei die enthaltenden Wirkstoffe vorzugsweise einen Gehalt von bis zu 60 Gew.-%, bevorzugt von bis zu 50 Gew.-%, insbesondere von bis zu 40 Gew.-%, bezogen auf den Masterbatch aufweisen.

Der Weg b) erfolgt vorzugsweise durch Einarbeitung von Lösungen der bioziden Zusammensetzungen, insbesondere der oben beschriebenen Feststoffpräparationen in vorgequollene Polymere wie bspw. PET, PVC, Fluorpolymere, HDPE, LDPE, LLDPE, PP, HDPP, LDPP, WHMWPE, MPE oder Mischungen davon und anschließendem Entfernen, insbesondere Strippen der Lösungsmittel.

Ein Verfahren zur Herstellung eines Wood-Plastic-Composites (WPC) ist, dass man
Holzpartikel, ein thermoplastisches Polymer und eine biozide Zusammensetzung, enthaltend TBZ, unter thermischer Energie vermischt, insbesondere extrudiert oder spritzgießt, dadurch gekennzeichnet, dass die Zusammensetzung einen Borat-Anteil (gemessen als B₂O₃) von kleiner als 0,1 Gew.-%, insbesondere kleiner 0,05 Gew.-%, insbesondere kleiner 0,01 Gew.-% aufweist.

Zur Herstellung von Wood-Plastic-Composites werden vorzugsweise die aus der Kunststofftechnologie abgeleiteten zweistufigen Verfahren angewendet. Hierbei werden vorzugsweise zunächst Granulate aus thermoplastischem Polymer, Holz und diversen Additiven wie bereits oben beschrieben (z.B. Pigmente, Haftvermittler usw.) durch z.B. die Verwendung von Heiz-Kühlmischern hergestellt und anschließend zu den eigentlichen Formteilen, z.B. durch Extrusion oder Spritzguss, verarbeitet.

Bei der Herstellung der WPC werden bevorzugt die üblicherweise für die verwendeten thermoplastischen Polymere angewendeten Temperaturen von 120 bis 300 °C bei der thermischen Mischung, insbesondere der Extrusion oder dem Spritzguss angelegt.

Die Zugabe der bioziden Zusammensetzung kann dabei im Rahmen unterschiedlicher Produktionsschritte eines WPC erfolgen.

Biozide Zusammensetzungen können im Rahmen der Compoundierung von Holzpartikeln und thermoplastischem Polymer, z.B. im Heiz-Kühlmischer, zugegeben werden.

Die bioziden Zusammensetzungen können vor der Compoundierung von Holzpartikeln, z.B. Holzfasern und thermoplastischem Polymer mit den Holzfasern bzw. dem Holzgranulat bzw. dem Holzmehl gemischt oder vor der Compoundierung von Holzpartikeln und thermoplastischem Polymer mit dem Kunststoffgranulat vermischt werden.

Die bioziden Zusammensetzungen können durch Verwendung geeigneter Lösungsmittel und Formulierhilfsmittel, z.B. Emulgatoren, in Lösungen, Emulsionen, Suspensionen oder Suspoemulsionen überführt und mit diesen die mit dem thermoplastischem Polymer zu compoundierenden Holzpartikel behandelt, z.B. durch Aufsprühen oder Tränken und diese ggf. getrocknet.

Zur Herstellung werden bevorzugt 28 bis 70 Gew.-% an thermoplastischem Polymer (z.B. PE, PP, PET, HDPE, HDPP, PVC), 28 bis 70 Gew.-% an Holzpartikel und 0.05 bis 2 Gew.-%, bevorzugt 0.1 bis 0.5 Gew.-%. der bioziden Zusammensetzung sowie ggf. weiterer Additive eingesetzt.

Wood-Plastic-Composites (WPC), enthaltend thermoplastisches Polymer und Holzpartikel, können TBZ enthalten und einen Borat-Anteil (gemessen als B₂O₃) von kleiner als 0,1 Gew.-%, insbesondere kleiner 0,05 Gew.-%, insbesondere kleiner 0,01 Gew.-% aufweisen.

WPC's können neben Holzpartikeln, thermoplastischem Polymer und dem TBZ weitere Additive, z.B. aus der Gruppe der Haftvermittler, Gleitmittel, UV-Stabilisatoren, Antioxidantien, Pigmente, Flammschutzmittel, Leitfähigkeitsverbesserer, Kunststoffstabilisatoren, enthalten, wobei selbstverständlich die obige Maßgabe hinsichtlich des Boratanteils gilt.

Die Erfindung betrifft weiterhin die Verwendung einer bioziden Mischung, enthaltend IPBC und TBZ und mindestens eine pyrogene Kieselsäure mit einem Gehalt von bis zu 3 Gew.-% bezogen auf die biozide Mischung, zum Schutz von Wood-Plastic-Composites (WPC), enthaltend thermoplastisches Polymer und Holzpartikel, vor Befall und/oder Zerstörung durch Mikroorganismen.

Eine solche Mischung wirkt auch gegen wichtige Pilzgattungen wie z.B. Alternaria, Ulocladium und Phoma. Die Kombinationen von TBZ mit IPBC genügen darüber hinaus den Anforderungen für den Schutz von WPC gegen Asco- und Deuteromyceten. Neben einer ausgeprägten synergistischen Wirkungssteigerung gegen Asco- und Deuteromyceten bei der Mischung beider Wirkstoffe wurde ferner überraschend und völlig unerwartet gefunden, dass durch TBZ offensichtlich eine Stabilisierung von IPBC gegen die bei der Herstellung der WPC auftretenden hohen Temperaturen eintritt.

Bevorzugt ist diese Verwendung dadurch gekennzeichnet, dass die biozide Mischung die Wirkstoffe IPBC und TBZ in einem Verhältnis von 1:99 bis 99:1, bevorzugt im Verhältnis 20:80 bis 80:20 und ganz besonders bevorzugt im Verhältnis 30:70 bis 70:30 enthält.

Ebenfalls enthält die biozide Mischung ein Trennmittel. Die Angaben zum Trennmittel, die bereits für die biozide Zusammensetzung gemacht wurden gelten auch hier. Wobei es bevorzugt ist, wenn die biozide Mischung zu mehr als 90 Gew.-%, vorzugsweise zu mehr als 95 Gew.-% aus IPBC, TBZ und ggf. weiteren bioziden Wirkstoffen und Trennmittel besteht.

Insbesondere besteht die biozide Mischung zu mehr als 90 Gew.-%, vorzugsweise zu mehr als 95 Gew.-% aus IPBC, TBZ und Trennmittel.

Weiterhin ist der Einsatz einer bioziden Mischung bevorzugt, die einen Borat-Anteil (gemessen als B₂O₃) von kleiner als 0,1 Gew.-% insbesondere kleiner 0,05 Gew.-%, insbesondere kleiner 0,01 Gew.-% aufweist.

Die biozide Mischung kann auch in Kombinationen mit weiteren Fungiziden gegen Holz zerstörende Basidiomyceten und/oder Insektiziden und/oder Algiziden zum Einsatz kommen. Als solche kommen die bereits oben genannten in Frage.

Ebenfalls bevorzugt ist die erfindungsgemäße Verwendung, bei der die biozide Mischung zusätzlich einen Leitfähigkeitsverbesserer (z.B. Graphit) mit einem Gehalt von bis zu 5 Gew.-%, bevorzugt mit einem Gehalt von bis zu 3 Gew.-% und ganz besonders bevorzugt mit einem Gehalt von bis zu 2.5 Gew.-% enthält.

Die eingesetzte biozide Mischung liegt vorzugsweise als partikuläre Feststoffpräparation oder in Form einer Lösung oder Dispersion der bioziden Mischung in einer Polymermatrix (im folgenden Masterbatch) vor.

Die partikuläre Feststoffpräparation kann dabei als Pulver oder Granulat vorliegen. Bevorzugt liegt sie in einer frei fließbaren Form vor. Die Primärpartikel der Feststoffpräparation weisen vorzugsweise eine Teilchengröße von nicht mehr als 500µm, bevorzugt weniger als 100µm, ganz besonders bevorzugt weniger als 50µm auf.

In Granulatform besitzt die Feststoffpräparation vorzugsweise eine mittlere Teilchengröße, bestimmt aus der Massenverteilung, von 50 bis 5 000 µm, vorzugsweise 100 bis 2 000 µm, insbesondere 100 bis 500 µm.

Die bevorzugt eingesetzten Feststoffpräparationen solcher bioziden Mischungen sind
selbst ebenfalls Gegenstand der Erfindung, wobei die obige Maßgabe des Boratanteils nicht gilt, jedoch durchaus bevorzugt ist.

Der Masterbatch ist vorzugsweise gekennzeichnet durch ein Polymer, vorzugsweise eines ausgewählt aus der Gruppe PVC, PET, Fluorpolymer, HDPE, LDPE, LLDPE, PP, HDPP, LDPP, WHMWPE, MPE oder einer Mischung davon und TBZ, ggf. Trennmittel und ggf. weitere Wirkstoffe sowie ggf. weitere Additive.

Der Masterbatch selbst ist auch Gegenstand der Erfindung und enthält vorzugsweise von 20 bis 99 Gew.-% Polymer, insbesondere 40 bis 70 Gew-% und 1 bis 80 Gew.-% TBZ und IPBC, insbesondere 30 bis 60 Gew.-%.

Die Erfindung betrifft weiterhin ein Verfahren zur Herstellung des erfindungsgemäßen Masterbatch, das dadurch gekennzeichnet ist, dass man
a) das Polymer und die erfindungsgemäße biozide Mischung, enthaltend TBZ und IPBC mischt und zusammen extrudiert oder
b) das in einem Lösungsmittel gequollene Polymer mit einer Lösung der erfindungsgemäßen bioziden Mischung, enthaltend TBZ und IPBC, mischt und die Lösungsmittel der gemeinsamen Mischung abtrennt, vorzugsweise destillativ.

Die übrigen bevorzugten Parameter des bereits oben beschriebenen Verfahrens gelten auch hier.

Die Erfindung betrifft weiterhin ein Verfahren zur Herstellung eines Wood-Plastic-Composites (WPC), dadurch gekennzeichnet, dass man Holzpartikel, ein thermoplastisches Polymer und die biozide Mischung, enthaltend TBZ und IPBC, unter thermischer Energie vermischt, insbesondere extrudiert oder spritzgießt.

Zur Herstellung von Wood-Plastic-Composites werden vorzugsweise die aus der Kunststofftechnologie abgeleiteten zweistufigen Verfahren angewendet. Hierbei werden vorzugsweise zunächst Granulate aus thermoplastischem Polymer, Holz und diversen Additiven (z.B. Pigmente, Haftvermittler usw.) durch z.B. die Verwendung von Heiz-Kühlmischern hergestellt und anschließend zu den eigentlichen Formteilen, z.B. durch Extrusion oder Spritzguss, verarbeitet.

Die übrigen obigen Angaben zur Herstellung von WPC gelten auch hier für die erfindungsgemäße biozide Mischung enthaltend IPBC und TBZ, wobei die Maßgabe der Boratmenge hier nicht zwingend, jedoch bevorzugt ist.

Die Erfindung betrifft weiterhin Wood-Plastic-Composites (WPC), enthaltend thermoplastisches Polymer und Holzpartikel, dadurch gekennzeichnet, dass es die erfindungsgemäße Mischung enthaltend TBZ und IPBC enthält. Die bevorzugten Mengenangaben sind bereits oben genannt.

### Beispiele

### %-Angaben bedeuten Gew.-%.

### Beispiel 1: Herstellung erfindungsgemäßer WPC-Prüfkörper

In einem Heiz-Kühl-Mischer wurden 64% Holzmehl (Kiefer), 30% HDPE, 0.2% einer Feststoffmischung (49.25% TBZ, 49.25% IPBC und 1,5% pyrogene Kieselsäure sowie weitere Additive (EBS-Wax, Phenol-Formaldehyd-Harz, PMDI) 10 Minuten vermischt. Diese Mischung wurde anschließend in den Fülltrichter eines mit einer Schlitz-Matrize ausgerüsteten gegenläufigen Doppelschneckenextruders (Cincinnati Milacron 55 mm) gefüllt. Die bei einer Wellen- bzw. Zylindertemperatur von 164°C und einer Temperatur der Matrize von 172°C extrudierten Bänder wurden nach Verlassen des Werkzeuges durch Wasser mit einer Temperatur von 20°C gekühlt.

### Beispiel 2: Nachweis der Beständigkeit gegen biologischen Befall

Der Nachweis der Beständigkeit gegen Material destruierende Pilze praktischer Relevanz wurde unter Nutzung eines Agar-Diffusionstests in Anlehnung an ISO 846 geführt. Hierzu wurde aus den analog nach Beispiel 1 hergestellten Bändern Prüfkörper der Dimension 5cm x 5cm geschnitten. Die Prüfkörper wurden durch Wässerung unter kontinuierlichem Wasserwechsel (120h; 20°C; Flussgeschwindigkeit 12 1/h) einer Auswasch-Beanspruchung unterzogen. Zur Prüfung auf Beständigkeit gegen Pilze wurden jeweils die gewässerten wie auch die ungewässerten Proben auf ein Malzextrakt-Nährmedium aufgelegt und nach Beimpfen für einen Zeitraum von 3 Wochen bei einer Temperatur von 26°C kultiviert. Die verwendete Impfe hatte folgende Keime: Penicillium funiculosum, Chaetomium globosum, Gliocladium virens, Paecilomyces variotii und Aspergillus niger.

Als erfindungsgemäße Formulierungen kamen zum Einsatz:
- Formulierung 1: 49.25% TBZ, 49.25% IPBC und 1.5% pyrogene Kieselsäure.
- Formulierung 2: 32.8% TBZ, 65.7% IPBC und 1.5% pyrogene Kieselsäure.

Als erfindungsgemäße WPC kamen zum Einsatz:
- WPC1:Nullprobe.
- WPC2: 0.2% der Formulierung 1.
- WPC3: 0.15% der Formulierung 2.

Nach Prüfung auf Beständigkeit gegen Pilze nach o.g. Schema wurden folgende Ergebnisse erhalten:

| | Wachstums-Inhibition (ungewässert) | Wachstums-Inhibition (gewässert) |
|---|---|---|
| WPC 1 | 0 / 0² / 0² | 0¹ / 0² / 0² |
| WPC 2 | 3 _{(2-3 mm)} / 3 _{(2-3 mm)} / 3 _{(2-3 mm)} | 2 / 2 / 2 |
| WPC 3 | 3 _{(2-3 mm)} / 3 _{(2-3 mm)} / 3 _{(2-3 mm)} | 2 / 2 / 2 |

| | | |
|---|---|---|
| ¹Aspergillus und Penicillium; Chaetomium globosum | | |

Folgendes Bewertungsschema liegt o.g. Ergebnissen zugrunde:

| | |
|---|---|
| 0 | Ungenügende Beständigkeit. Befall der Probe>10%. |
| 1 | Moderate Beständigkeit. Befall der Probe ≤10%. |
| 2 | Gute Beständigkeit. Kein Befall der Probe. |
| 3 | Gute Beständigkeit. Kein Befall der Probe. Auftreten eines Hemmhofes auf dem Nährmedium (Angabe der Ausdehnung des Hemmhofes in mm). |

### Beispiel 3: Nachweis der Beständigkeit gegen biologischen Befall

Analog zu Beispiel 2 wurde der Nachweis der Beständigkeit der erfindungsgemäßen WPC auch gegen folgende Material destruierende Pilze praktischer Relevanz erbracht: Fusarium sp., Bipolaris sp, Ascomycetes sp., Fusarium sp und Aspergillus niger.

Nach Prüfung auf Beständigkeit gegen Pilze nach o.g. Schema (Beispiel 2) wurden folgende Ergebnisse erhalten:

| | Wachstums-Inhibition (ungewässert) | Wachstums-Inhibition (gewässert) |
|---|---|---|
| WPC 1 | 0 / 0 / 0 | 0 / 0 / 0 |
| WPC 2 | 3 _{(3-4 mm)} / 3 _{(3-4 mm)} / 3 _{(3-4 mm)} | 2 / 2 / 2 |
| WPC 3 | 3 _{(3-4 mm)} / 3 _{(3-4 mm)} / 3 _{(3-4 mm)} | 2 / 2 / 2 |

### Beispiel 4 (Nicht erfindungsgemäss)

### Analog zu Bsp. 2 wurde folgende Formulierung hergestellt und eingesetzt.

Als Formulierungen kamen zum Einsatz:
- Formulierung 1: 98,5% TBZ, und 0,5 % MG-Stearat und 1 % pyrogene Kieselsäure.

Als erfindungsgemäße WPC kamen zum Einsatz:
- WPC1: Nullprobe.
- WPC2: 0.25% der Formulierung 1.
- WPC3: 0.2% der Formulierung 1.

Nach Prüfung wurde auf Beständigkeit gegen folgende Keime getestet: Penicillium funiculosum, Chaetomium globosum, Gliocladium virens, Paecilomyces variotii und Aspergillus niger.

Nach Prüfung wurden folgende Ergebnisse erhalten.

| | Wachstums-Inhibition (ungewässert) | Wachstums-Inhibition (gewässert) |
|---|---|---|
| WPC 1 | 0 / 0² / 0² | 0¹ / 0² / 0² |
| WPC 2 | 3 _{(2-3 mm)} / 3 _{(2-3 mm)} / 3 _{(2-3 mm)} | 2 / 2 / 2 |
| WPC 3 | 3 _{(2 mm)} / 3 _{(2 mm)} / 3 _{(2 mm)} | 2 / 2 / 2 |

| | | |
|---|---|---|
| ¹ Aspergillus und Penicillium; ² Chaetomium globosum | | |

## Patentansprüche

1. Biozide Mischung enthaltend IPBC, TBZ und als Trennmittel mindestens eine pyrogene Kieselsäure mit einem Gehalt von bis zu 3 Gew.-% bezogen auf die biozide Mischung.

2. Partikuläre Feststoffpräparation, enthaltend biozide Mischung gemäß Anspruch 1.

3. Partikuläre Feststoffpräparation gemäß Anspruch 2, **dadurch gekennzeichnet, dass** sie zu mehr als 90 Gew.-%, vorzugsweise zu mehr als 95 Gew.-% aus IPBC, TBZ und Trennmittel besteht.

4. Feststoffpräparation gemäß Anspruch 3, **dadurch gekennzeichnet, dass** sie als Granulat mit einer mittleren Teilchengröße, bestimmt aus der Massenverteilung, von 50 bis 5 000 µm, vorzugsweise 100 bis 2 000 µm, insbesondere 100 bis 500 µm vorliegen.

5. Verwendung einer bioziden Mischung gemäß Anspruch 1 zum Schutz von Wood-Plastic-Composites (WPC), enthaltend thermoplastisches Polymer und Holzpartikel, vor Befall und/oder Zerstörung durch Mikroorganismen.

6. Verwendung gemäß Anspruch 5, **dadurch gekennzeichnet, dass** die biozide Mischung die Wirkstoffe IPBC und TBZ in einem Verhältnis von 1:99 bis 99:1, bevorzugt im Verhältnis 20:80 bis 80:20 und ganz besonders bevorzugt im Verhältnis 30:70 bis 70:30 enthält.

7. Verwendung gemäß Anspruch 5, **dadurch gekennzeichnet, dass** die biozide Mischung einen Borat-Anteil (gemessen als B₂O₃) von kleiner als 0,1 Gew.-%, insbesondere kleiner 0,05 Gew.-%, insbesondere kleiner 0,01 Gew.-% aufweist.

8. Verwendung gemäß Anspruch 5, **dadurch gekennzeichnet, dass** die biozide Mischung zu mehr als 90 Gew.-%, vorzugsweise zu mehr als 95 Gew.-% aus IPBC, TBZ und Trennmittel besteht.

9. Verwendung gemäß Anspruch 5, **dadurch gekennzeichnet, dass** die biozide Mischung als partikuläre Feststoffpräparation oder als Masterbatch eingesetzt wird.

10. Verfahren zur Herstellung eines Wood-Plastic-Composites (WPC), **dadurch gekennzeichnet, dass** man Holzpartikel, ein thermoplastisches Polymer und eine biozide Mischung gemäß Anspruch 1 unter thermischer Energie vermischt, insbesondere extrudiert oder spritzgießt.

11. Wood-Plastic-Composites (WPC), enthaltend thermoplastisches Polymer und Holzpartikel, **dadurch gekennzeichnet, dass** sie eine biozide Mischung gemäß Anspruch 1 enthalten.

12. Wood-Plastic-Composites gemäß Anspruch 11, **dadurch gekennzeichnet, dass** sie einen Borat-Anteil (gemessen als B₂O₃) von kleiner als 0,1 Gew,-%, insbesondere kleiner 0,05 Gew.-%, insbesondere kleiner 0,01 Gew.-% aufweist.

13. Masterbatch, enthaltend Polymer und biozide Mischungen gemäß Anspruch 1.

14. Masterbatch gemäß Anspruch 13, **dadurch gekennzeichnet, dass** als Polymer ein PVC, Fluorpolymer, HDPE, LDPE, LLDPE, PP, HDPP, LDPP, WHMWPE, MPE oder eine Mischung davon in Frage kommt.

15. Verfahren zur Herstellung eines Masterbatches gemäß Anspruch 13 oder 14, **dadurch gekennzeichnet, dass** man
a) das Polymer und eine biozide Mischung gemäß Anspruch 1 mischt und zusammen extrudiert oder
b) das in einem Lösungsmittel gequollene Polymer mit einer Lösung einer bioziden Mischung, gemäß Anspruch 1 mischt und das Lösungsmittel der gemeinsamen Mischung abtrennt.

## Claims

1. Biocidal mixture containing IPBC, TBZ and, as lubricant, at least one pyrogenic silica with a content of up to 3% by weight based on the biocidal mixture.

2. Particulate solid preparation containing biocidal mixture according to Claim 1.

3. Particulate solid preparation according to Claim 2, **characterized in that** it consists of more than 90% by weight, preferably more than 95% by weight, of IPBC, TBZ and lubricant.

4. Solid preparation according to Claim 3, **characterized in that** it is present as granules having a mean particle size, determined from the mass distribution, of 50 to 5000 µm, preferably 100 to 2000 µm, in particular 100 to 500 µm.

5. Use of a biocidal mixture according to Claim 1 for protecting wood-plastic composites (WPC), containing thermoplastic polymer and wood particles, from attack and/or destruction by microorganisms.

6. Use according to Claim 5, **characterized in that** the biocidal mixture contains the active substances IPBC and TBZ in a ratio of 1:99 to 99:1, preferably in the ratio of 20:80 to 80:20 and very particularly preferably in the ratio of 30:70 to 70:30.

7. Use according to Claim 5, **characterized in that** the biocidal mixture has a proportion of borate (measured as B₂O₃) of less than 0.1% by weight, in particular less than 0.05% by weight, especially less than 0.01% by weight.

8. Use according to Claim 5, **characterized in that** the biocidal mixture consists of more than 90% by weight, preferably more than 95% by weight, of IPBC, TBZ and lubricant.

9. Use according to Claim 5, **characterized in that** the biocidal mixture is used as a particulate solid preparation or as a masterbatch.

10. Process for the production of a wood-plastic composite (WPC), **characterized in that** wood particles, a thermoplastic polymer and a biocidal mixture according to Claim 1 are mixed with thermal energy, in particular extruded or injection moulded.

11. Wood-plastic composites (WPC), containing thermoplastic polymer and wood particles, **characterized in that** they contain a biocidal mixture according to Claim 1.

12. Wood-plastic composites according to Claim 11, **characterized in that** they have a proportion of borate (measured as B₂O₃) of less than 0.1% by weight, in particular less than 0.05% by weight, especially less than 0.01% by weight.

13. Masterbatch containing polymer and biocidal mixtures according to Claim 1.

14. Masterbatch according to Claim 13, **characterized in that** a PVC, fluoropolymer, HDPE, LDPE, LLDPE, PP, HDPP, LDPP, WHMWPE, MPE or a mixture thereof is suitable as the polymer.

15. Process for the preparation of a masterbatch according to Claim 13 or 14, **characterized in that**
a) the polymer and a biocidal mixture according to Claim 1 are mixed and are extruded together or
b) the polymer swollen in a solvent is mixed with a solution of a biocidal mixture according to Claim 1, and the solvent of the common mixture is separated off.

## Revendications

1. Mélange biocide contenant de l'IPBC, du TBZ et en tant qu'agent de séparation au moins une silice pyrogénée ayant une concentration de jusqu'à 3 % en poids par rapport au mélange biocide.

2. Préparation de matière solide particulaire, contenant un mélange biocide selon la revendication 1.

3. Préparation de matière solide particulaire selon la revendication 2, **caractérisée en ce qu'**elle consiste à raison de plus de 90 % en poids, de préférence de plus de 95 % en poids, en IPBC, TBZ et agent de séparation.

4. Préparation de matière solide selon la revendication 3, **caractérisée en ce qu'**elle se trouve sous forme de granulé ayant une taille moyenne de particule, déterminée à partir de la répartition selon la masse, de 50 à 5 000 µm, de préférence de 100 à 2 000 µm, en particulier de 100 à 500 µm.

5. Utilisation d'un mélange biocide selon la revendication 1 pour la protection de composites bois-plastique (WPC), contenant un polymère thermoplastique et des particules de bois, contre l'attaque et/ou la destruction par des micro-organismes.

6. Utilisation selon la revendication 5, **caractérisée en ce que** le mélange biocide contient les substances actives IPBC et TBZ en un rapport de 1:99 à 99:1, de préférence en un rapport de 20:80 à 80:20 et de façon tout particulièrement préférée en un rapport de 30:70 à 70:30.

7. Utilisation selon la revendication 5, **caractérisée en ce que** le mélange biocide présente une teneur en borate (mesurée en tant que B₂O₃) inférieure à 0,1 % en poids, en particulier inférieure à 0,05 % en poids, en particulier inférieure à 0,01 % en poids.

8. Utilisation selon la revendication 5, **caractérisée en ce que** le mélange biocide consiste à raison de plus de 90 % en poids, de préférence de plus de 95 % en poids, en IPBC, TBZ et agent de séparation.

9. Utilisation selon la revendication 5, **caractérisée en ce que** le mélange biocide est utilisé sous forme de préparation de matière solide particulaire ou de mélange-maître.

10. Procédé pour la production de composites bois-plastique (WPC), **caractérisé en ce qu'**on mélange sous énergie thermique, en particulier extrude ou moule par injection, des particules de bois, un polymère thermoplastique et un mélange biocide selon la revendication 1.

11. Composites bois-plastique (WPC), contenant un polymère thermoplastique et des particules de bois, **caractérisés en ce qu'**ils contiennent un mélange biocide selon la revendication 1.

12. Composites bois-plastique selon la revendication 11, **caractérisés en ce qu'**ils présentent une teneur en borate (mesurée en tant que B₂O₃) inférieure à 0,1 % en poids, en particulier inférieure à 0,05 % en poids, en particulier inférieure à 0,01 % en poids.

13. Mélange-maître, contenant un polymère et des mélanges biocides selon la revendication 1.

14. Mélange-maître selon la revendication 13, **caractérisé en ce qu'**en tant que polymère on prend en considération un PVC, un polymère fluoré, un HPDE, LDPE, LLDPE, PP, HDPP, LDPP, WHMWPE, MPE ou un mélange de ceux-ci.

15. Procédé pour la préparation d'un mélange-maître selon la revendication 13 ou 14, **caractérisé en ce que**
a) on mélange le polymère et un mélange biocide selon la revendication 1 et on les extrude ensemble ou
b) on mélange le polymère gonflé dans un solvant avec une solution d'un mélange biocide selon la revendication 1 et on sépare le solvant du mélange formé.
